# EUROPÄISCHE PATENTSCHRIFT

(11) **EP 0 524 396 B1**
(45) Veröffentlichungstag und Bekanntmachung des Hinweises auf die Patenterteilung: **15.01.1997**
(21) Anmeldenummer: 92108403.4
(22) Anmeldetag: 19.05.1992
(51) Int. Cl.: C22B 7/00, B03B 9/06

(54) **Verfahren und Vorrichtung zum Aufbereiten von Geräteschrott**
Method and device for recycling scrap of appliances
Procédé et dispositif pour la récupération des rebuts d'appareils

(30) Priorität: 23.07.1991 DE 4124370
(43) Veröffentlichungstag der Anmeldung: 27.01.1993
(73) Patentinhaber: Lindemann Maschinenfabrik GmbH, 40231 Düsseldorf (DE)
(72) Erfinder: Julius, Jörg, W-4000 Düsseldoff 13 (DE)

(56) Entgegenhaltungen:
- DD-A- 231 578
- DE-A- 3 347 230
- DE-A- 3 539 902
- DE-A- 3 923 910
- JOM, Bd.43, Nr.4, April 1991, WARRENDALE US Seiten 53 - 61 E. Y. L. SUM 'The Recovery of Metals from Electronic Scrap'

## Beschreibung

Die Erfindung betrifft ein Verfahren und eine Vorrichtung zum Aufbereiten von metallische und nichtmetallische Teile enthaltendem Gerate-, insbesondere Elektronikschrott, der zerkleinert und mehrstufig sortiert wird.

Unter dem genannten Geräte-, insbesondere Elektronikschrott werden viele alte, ausgemusterte Gerätearten der industriellen und Konsum-Elektronik verstanden, zum Beispiel Computer und deren Peripheriegeräte, Fotokopiergeräte, Telefonverteilungen, sogenannte "Weiße Ware", d. h. Teile von Wasch- und Spülmaschinen sowie Kleinhaushaltsgeräte, sogenannte "Braune Ware", d. h. u.a. Radio- und Fernsehgeräte sowie das gesamte Audio- und Videozubehör, und letztlich Produktionsabfälle, beispielsweise in Form von bestückten Platinen, Relais und Gemische von Elektronikbauteilen. Die Zusammensetzung dieses Schrotts ist äußerst vielfältig und heterogen; die verschiedensten Werkstoffe treten in sehr unregelmäßiger und meist feiner Verteilung auf. Im metallischen Anteil finden sich hauptsächlich Eisen, Kupfer, Aluminium, Bunt- und Lötmetalle sowie verschiedene Edelmetalle, wie Gold, Silber, Platin, Palladium etc.. Der nichtmetallische Anteil setzt sich im wesentlichen aus verschiedenartigen, teilweise faserverstärkten Kunststoffen, Keramik, Glas etc. zusammen.

Das gemeinsame Merkmal dieser Art des zukünftig in immer größeren Mengen anfallenden Schrottes ist somit seine besonders komplexe Zusammensetzung, wobei Metalle und Nichtmetalle zudem in vielfältigsten Verbindungen vorkommen. Darüber hinaus ist auch der Wertstoffgehalt - insbesondere der Gehalt an Edelmetallen - stark abhängig von der Art der Altelektronikgeräte und deren Baujahr. So enthalten ältere Geräte der Konsumelektronik praktisch kaum Edelmetalle, während gerade Computer älteren Baujahrs recht hohe Edelmetallgehalte aufweisen.

Bei einem durch die DE-OS 39 23 910 bekanntgewordenen Verfahren werden durch stufenweises und abwechselndes mechanisches Zerkleinern und magnetisches sowie mechanisch-physikalisches Separieren des Schrottes dessen nichtmetallische Fraktion sowie die magnetische und die nichtmagnetische Metallfraktion in Granulat und Staubform getrennt, um anschließend die beiden Metallfraktionen der pyrolysefreien, naßchemischen und/oder elektrolytischen Trennung zuzuführen. Es sind dort im Materialfluß in bestimmter Reihenfolge mindestens zwei mechanische Zerkleinerungsaggregate, ein Magnetseparator und zur Trennung des von dem Magnetseparator abgetrennten Gemisches aus magnetischer Metallfraktion und nichtmagnetischer Metallfraktion mindestens zwei mechanisch-physikalische Trennaggregate vorhanden. Außerdem sind im Materialfluß ein Windsichter, ein Zyklon und drei Siebe angeordnet. Bei diesem bekannten Verfahren sind insbesondere die mechanischen Zerkleinerungs- und/oder mechanischphysikalischen Trennaggregate nachteilig. Sie erhöhen nicht nur der, Anlagenaufwand, sondern bewirken - wie Versuche gezeigt haben - eine zu weit gehende Zerkleinerung des Aufgabeguts, mit dem Ergebnis, daß Edelmetalle, die hauptsächlich in dünnen Schichten auf Steck- und Schaltkontakten und ähnlichem vorliegen, abgelöst werden und - fein verteilt - praktisch kaum noch zurückzugewinnen sind.

Der Erfindung liegt die Aufgabe zugrunde, ein Verfahren und eine Vorrichtung zu schaffen, die es ermöglichen, trotz der heterogenen Zusammensetzung des zu behandelnden Aufgabeguts umweltschonend eine weitgehende Rückgewinnung metallischer Wertstoffe und deren Anreicherung in verschiedenen Endprodukten zu erreichen, insbesondere die Rückgewinnung von Edelmetallen zu optimieren.

Diese Aufgabe wird mit einem Verfahren erfindungsgemäß dadurch gelöst, daß das Aufgabegut einstufig und selektiv, prall- und/oder schlagbeansprucht zerkleinert und mehrstufig klassiert wird. Dabei wird die Tatsache ausgenutzt, daß z.B. edelmetallhaltige Verbundstoffe - vorwiegend durch Prall- und Schlagbeanspruchung beim Zerkleinerungsvorgang - weitgehender und schneller als andere Komponenten zerkleinert und aufgeschlossen werden, wodurch es gelingt, die Edelmetalle allein schon durch nachfolgende Klassierverfahren in einem Produkt stark anzureichern. Durch Sprödbruch des umgebenden Materials werden die eingeschlossenen Edelmetalle freigelegt und somit nichtmetallische Werkstoffe von den duktilen Edelmetallen getrennt. So liegen beispielsweise Kontakte aus kunststoffummantelten Steckerleisten, die sehr häufig dünne Edelmetallauflagen aufweisen, nach der Zerkleinerung schon aufgeschlossen und kleinstückig vor, während andere metallische Bestandteile, wie Teile vom Gehäuse, Chassis und Kühlkörper wesentlich grobstückiger verbleiben.Versuche ergaben, daß allein durch selektive Zerkleinerung und Siebklassierung eine erhebliche Anreicherung an Edelmetallen im Siebunterlauf erzielt werden kann. Dies zeigen auch die nachstehenden Tabellen, aus denen die Ergebnisse einer Absiebung von zerkleinertem Telefonschrott ersichtlich werden. Deutlich ist die Anreicherung an Silber im abgesiebtem Material kleiner 10 mm gegenüber dem einstufig zerkleinerten, nicht abgesiebten Material erkennbar.

| Zusammensetzung | |
|---|---|
| Fe - Metalle (Eisen und Stahl) | 61,0 Gew.-% |
| NE - Metalle und Nichtmetalle | 39,0 Gew.-% |

| Einstufig zerkleinertes NE - Metallgemisch: | |
|---|---|
| Cu | 51,20 Gew.-% |
| Zn | 7,80 Gew.-% |
| Ag | 0,07 Gew.-% |
| andere NE - Metalle | 24,90 Gew.-% |
| organische Stoffe (brennbar) | 16,03 Gew.-% |

| Einstufig zerkleinertes und <10 mm abgesiebtes NE-Metallgemisch: | |
|---|---|
| Cu | 73,20 Gew.-% |
| Zn | 4,80 Gew.-% |
| Ag | 0,58 Gew.-% |
| andere NE - Metalle | 7,17 Gew.-% |
| Organisches (brennbar) | 13,85 Gew.-% |

Abweichend von den bekannten Aufbereitungsverfahren findet also keine mehrstufige Zerkleinerung des Geräteschrottes in aufeinanderfolgenden Zerkleinerungsaggregaten statt, vielmehr wird selektiv zerkleinert und im Verfahrensablauf mehrstufig klassiert. Darüber hinaus werden gezielt metallische Bestandteile, die nach den Klassierstufen als Überkorn anfallen, mittels geeigneter Sortierverfahren in reiner Form zurückgewonnen. Dies sind insbesondere Eisen und Stahl, die durch Magnetscheidung abgetrennt werden, sowie Nichteisenmetalle - wie vor allem Aluminium, Kupfer, Messing und Zink - die mittels Wirbelstromscheidung zurückgewonnen werden. In die Zerkleinerungsstufe zurückgeführt werden nur solche Bestandteile, die noch nicht vollständig aufgeschlossen vorliegen, wie insbesondere Metall-/Nichtmetall-Verbindungen aber auch Verbindungen aus Fe- und NE-Metallen.

Ein weiteres erfindungsgemäßes Merkmal ist, daß zwischen einer ersten und einer zweiten Siebstufe im Aufbereitungsprozeß Langteile wie Drähte, Litzen u.dgl. aussortiert werden. Somit wird eine im Verfahrensgang frühzeitige Abtrennung von störenden Bestandteilen, wie vor allem von isolierten und nicht isolierten Kupfer-Drähten und -Litzen erreicht. Ein Aussortieren dieser Teile, wobei als Trennmerkmal ihre spezielle Form dient, nach der ersten Absiebung und einer Magnetscheidung bringt den Vorteil, daß Fehlausträge vermieden werden. Es besteht nämlich einerseits das Problem, daß beim Zerkleinern von beispielsweise Spulen, Kleintransformatoren, Relais, Kabelbäumen etc. sehr viele Drähte und Litzen in unterschiedlichsten Längen vorliegen, die bei unsachgemäßer Behandlung dazu neigen, sich zu verknäuelen und dabei andere Teile einzuschließen, zum Beispiel edelmetallhaltige Anteile; andererseits läßt sich nicht vollständig verhindern, daß beim Zerkleinern von beispielsweise Kleintrafos oder Relais Teile der Kupferdrahtwicklung physisch noch mit Teilen des Blechpaketes oder des Wicklungskerns verbunden sind. Daher werden in der ersten Siebstufe aus dem zerkleinerten Aufgabegut als Siebüberlauf anfallende, reine Fe-Teile aus dem Aufbereitungsprozeß entfernt; hingegen Metall-/Nichtmetallverbindungen wie Fe-/NE-Verbundteile aussortiert, in die Zerkleinerungsstufe zurückgeführt und nichtmagnetisierbare Anteile weiter aufbereitet, d. h. im Zerkleinerer weiter aufgeschlossen.

Es empfiehlt sich, beim Zerkleinern und vor dem Absieben Staub sowie leichtere, flugfähige Anteile abzusaugen. Auf diese Weise lassen sich beispielsweise auch Aluminium- und Kunststoffolien sowie Papier bereits in diesem Stadium dem weiteren Behandlungsprozeß entziehen.

Es wird vorgeschlagen, daß die von Langteilen bzw. Drähten u.dgl. befreiten, nichtmagnetisierbaren Teile einer zweiten Siebstufe zugeführt werden und der Siebüberlauf dieser Siebstufe - wie vorteilhaft auch die im Anschluß an die erste Siebstufe abgetrennten, nichtmagnetisierbaren Teile - auf einen Wirbelstromscheider aufgegeben werden. Somit läßt sich ein Abtrennen von NE-Metallen erreichen, die aufgrund der selektiven Zerkleinerung großstückiger geblieben sind (vor allem Aluminium, Magnesium, Kupfer, Zink und Messing) und die aufgrund ihrer Verwendung als mechanische Konstruktionsteile praktisch kein Edelmetall enthalten.

Wenn der Siebunterlauf der zweiten Siebstufe stromklassiert und anschließend getrenntes Leichtgut in die Zerkleinerungsstufe zurückgeführt wird, lassen sich diese Teile - vorwiegend Nichtmetall-/Metallverbundstoffe - weiter aufschließen und darin enthaltene Wertstoffe zurückgewinnen.

Die Wertstoffrückgewinnung wird weiterhin dadurch erhöht, daß die vom Wirbelstromscheider nicht ausgelenkten Teile des Aufgabeguts in die Zerkleinerungsstufe zurückgeführt und dort nachzerkleinert werden.

Vorteilhaft werden aus dem beim Stromklassieren abgetrennten Schwergut die magnetisierbaren von den nichtmagnetisierbaren Teilen abgetrennt und letztere zur Rückgewinnung von Wertstoffen vorzugsweise auf einen (zweiten) Wirbelstromscheider aufgegeben. Es werden damit solche NE-Metalle abgetrennt, die keine Edelmetalle enthalten, wie vor allem Aluminium und Magnesium.

Weiter wird vorgeschlagen, daß die vom Wirbelstromscheider nicht ausgelenkten Teile in einer dritten Siebstufe in zwei Fraktionen klassiert und anschließend gezielt spezifisch leichtere Teile von spezifisch schwereren Teilen abgetrennt werden. In einer weiteren, abschließenden Sortierung lassen sich dann nämlich einfacher Je ein nichtmetallisches Gut sowie ein Schwergut gewinnen. Das Schwergut, in dem normalerweise überwiegend Kupfer zu finden ist, enthält eine Anreicherung an Edelmetallen. Dieses Endprodukt kann mit bekannten Verfahren weiter so aufbereitet werden, daß die Edelmetalle zurückgewonnen werden können.

Bei einer Vorrichtung zum Aufbereiten des erwähnten Aufgabegutes sind einem Zerkleinerer mehrere Siebe mit von Sieb zu Sieb feineren Lochöffnungen nachgeschaltet. Dem Zerkleinerer können vorteilhaft ein Grobsieb sowie für den Siebüber- und den Siebunterlauf Jeweils ein Magnetscheider, im Anschluß an den Siebunterlauf-Magnetscheider ein Langteilseparator sowie ein zweites, mittelgrobes Sieb, für den Siebüberlaufein Wirbelstromscheider und den Siebunterlaufein Windsichter mit einem Magnetscheider, einem Wirbelstromscheider und einem Feinsieb sowie Luftherde für Jeweils den Siebüber- und den Siebunterlauf in der angegebenen Reihenfolge nachgeschaltet sein. Es hat sich nämlich gezeigt, daß die bestimmte Wahl der Behandlungsstufen Zerkleinerung/Siebklassierung die gewünschte Edelmetallanreicherung beim Trennergebnis erreichen läßt. Allerdings wird der Geräte- bzw. Elektronikschrott vor der eigentlichen mechanischen Aufbereitung noch einer Inspektion und manuellen Auslese unterworfen, um stör- und schadstoffhaltige Gefahrstoffe vorab zu entfernen. Hier sind vor allem folgende Komponenten zu nennen:
- Kunststoffgehäuse, die u.a. bromierte Diphenylether als Flammschutzmittel enthalten
- Bildröhren, die u.a. Cadmium enthalten
- Batterien und Akkumulatoren, die u.a. Quecksilber und Cadmium enthalten
- bestimmte Kondensatoren, die u.a. PCB enthalten.

Wenn das Grobsieb als Teil einer Schwingrinne gestuft ausgebildet ist, läßt sich ein Teilluftstrom der für den Zerkleinerer - vorzugsweise ein Shredder, der mit schnell umlaufenden Schlagwerkzeugen versehen ist und das Aufgabegut vorwiegend auf Schlag und Prall beansprucht, wodurch es zu einer selektiven Zerkleinerung kommt - zum Entstauben benötigten Luft durch den Fallweg an der Stufe hindurchführen. Staub sowie leichtere flugfähige Bestandteile, wie AL- und Kunststoffolien sowie Papier lassen sich auf diese Weise absaugen. Gleichzeitig separiert das Grobsieb das Aufgabegut bei einer Trennkorngröße von 20 bis 30 mm, vorzugsweise bei 25 mm. Durch diese sortierende Klassierung werden insbesondere edelmetallhaltige Komponenten wie Kontakte und ähnliches, die im Shredder von dem umhüllenden Kunststoffmaterial befreit wurden, aufgrund ihrer geringeren Stückgröße gegenüber anderen Metallteilen abgetrennt.

Für den dem Siebunterlauf zugeordneten Magnetscheider wird vorzugsweise ein Überbandmagnetscheider verwendet. Der Siebüberlauf wird vorzugsweise über eine zweistufige Kombination aus Trommel- und Überbandmagnetscheider hinweggeleitet. Damit soll erreicht werden, daß noch nicht vollständig aufgeschlossene Bestandteile wie Fe-/NE-Verbundstoffe zum Zerkleinerer zurückgeleitet werden, während sortenreine Fe-Teile getrennt ausgetragen und somit dem weiteren Behandlungsprozeß entzogen werden. Dieses letztgenannte Fe-Produkt stellt aufgrund seiner hohen Dichte und seiner Reinheit ein begehrtes und gut verkaufsfähiges Erzeugnis dar.

Es empfiehlt sich, daß der Langteilseparator nach dem Magnetscheider für den Siebunterlauf angeordnet ist. Drähte und Litzen lassen sich im Behandlungsgang somit frühzeitig abtrennen. Zu diesem Zweck kann ein Langteilseparator eingesetzt werden (vgl. die ältere Patentanmeldung P 40 41 529.5), der aus einer Schwingrinne und zumindest einer ihrer Breite angepaßten Bürste besteht. Bei einer Schwing- bzw. Vibrationsrinne ergibt sich während der Zuführung aufgrund der Schwingungen eine einlagige Ausbreitung des Aufgabeguts. Dies erlaubt es der Bürste, die in dem Aufgabegut enthaltenen Drähte aufzunehmen, während die übrigen Gemischbestandteile die Bürste passieren können.

Ein zweites Sieb kann als vibrierendes Stangensieh ausgebildet sein, mit einer bei etwa 6 bis 12 mm, vorzugsweise 8 mm liegenden Trennkorngröße. Dieses sich dem Langteilseparator anschließende, zweite Sieb ermöglicht nochmals eine sortierende Klassierung, da die selektiv zerkleinerten Komponenten - auch bei einmaligem Durchlauf durch den Zerkleinerer - größtenteils kleiner als die Lochweite des zweiten Siebes sind.

Die als NE-Scheider eingesetzten Wirbelstromscheider weisen vorteilhaft exzentrisch in einer von einem Fördergurt umschlungenen Trommel angeordnete, mit Permanentmagneten bestückte Rotoren auf. Derartige NE-Abscheider (vgl. die DE-OS 39 09 499), bei denen ein Wechselmagnetfeld anstelle mittels eines exzentrisch angeordneten Magnetrotors zum Beispiel auch mit einem Induktor erzeugt werden kann, erlauben es, die sogenannte Wirbelstromscheidung von nichtmagnetisierbaren, elektrisch gut leitfähigen Metallen durchzuführen. In den elektrisch leitfähigen Teilen des zu trennenden Aufgabeguts werden Wirbelströme induziert, die eigene, dem Erzeugerfeld entgegengerichtete Magnetfelder aufbauen und dadurch diese Teile durch elektromagnetische Kräfte relativ zu den übrigen Teilen des Aufgabeguts beschleunigen und damit auslenken. Durch Wirbelstromscheidung lassen sich nicht ferromagnetische, elektrisch gut leitfähige Stoffe somit hervorragend von Steinen, Glas, Porzellan etc. trennen. Im erfindungsgemäßen Behandlungsablauf werden mittels der Wirbelstromscheidung NE-Metalle abgetrennt, die bei der selektiven Zerkleinerung großstückig geblieben sind. Das nicht ausgelenkte Gut des Wirbelstromscheiders wird zur Nachzerkleinerung über eine Handsortierung zum Zerkleinerer zurückgeführt. Die Handsortierung eignet sich auch dazu, evtl. enthaltenen Edelstahl sowie ggfl. auch erkennbare Störstoffe - zum Beispiel Kupfer-/Fe-Verbundstoffe - abzusondern.

Das im Behandlungsprozeß verbleibende Material wird vorteilhaft einem Windsichter zugeführt, der als Vertikal-Gegenstromsichter ausgebildet und an einen Zyklon angeschlossen sein kann. Das in den Windsichter aus dem Siebunterlauf des zweiten Siebes gelangende Material wird von oben in einen überwiegend vertikalen Luftkanal aufgegeben, in dem die Sichtluft von unten aufströmt. Das auf diese Weise abzutrennende Leichtgut (flugfähige Stoffe) wird im angeschlossenen Zyklon von der Trägerluft befreit und - um auch die in dem Leichtgut (wie Versuche gezeigt haben) enthaltenen, edelmetallhaltigen Komponenten zurückgewinnen zu können - zur nochmaligen Zerkleinerung in den Zerkleinerer zurückgeführt.

Ein vorteilhaft dem Windsichter nachgeschalteter Magnetscheider läßt sich vorzugsweise als Starkfeld-Magnettrommelscheider ausbilden. Es ist damit möglich, in dem bei der Windsichtung anfallenden Schwergut evtl. noch enthaltenes Fe sowie schwachmagnetisierbare NE-Metalle und außerdem Edelstahlteile abzusondern. Das nichtmagnetisierbare Produkt dieses Magnetscheiders kann sodann einem weiteren Wirbelstromscheider zugeführt werden, der solche NE-Metalle (vor allem Aluminium und Magnesium) abtrennt, die keine Edelmetalle enthalten.

Das nicht ausgelenkte Material des Wirbelstromscheiders wird dem dritten Sieb zugeführt, das das Aufgabegut bei einer Trennkorngröße von ca. 3 bis 8 mm, vorzugsweise von 5 mm, in zwei Fraktionen klassiert. Dies ermöglicht ein besseres Sortieren auf den sich anschließenden Luftherden, die sich vorteilhaft über Zwischenbunker dosiert beschicken lassen. Mit den Luftherden lassen sich spezifisch leichtere Bestandteile von spezifisch schwereren Bestandteilen abtrennen und Je ein nichtmetallisches Leichtgut sowie je ein überwiegend Kupfer enthaltendes metallisches Schwergut gewinnen, welches den wesentlichen Anteil an Edelmetallen enthält.

Es empfiehlt sich, daß der Zerkleinerer, die Siebe, der Zyklon und die Luftherde an ein Filter angeschlossen sind, so daß eine Entstaubung möglich ist.

Weiterhin wird vorgeschlagen, daß dem Filter ein viertes, sehr feines Sieb nachgeschaltet ist. Sollten trotz der einstufigen Zerkleinerung und des damit selektiven Aufschließens metallhaltiger Stoffe dennoch Edelmetalle im Zyklon- und im Filteraustrag vorliegen, speziell als feine und feinste Körnungen, so läßt sich in dem Sieb bei Trennkorngrößen zwischen ca. 0,5 bis 1,5 mm edelmetallhaltiger Staub von anderen Stoffen - zum Beispiel Kunststoffolien - trennen.

Weitere Merkmale und Vorteile der Erfindung ergeben sich aus den Ansprüchen und der nachfolgenden Beschreibung der beigefügten, schematisch als Fließschema eine Anlage zum Aufbereiten von metallische und nichtmetallische Teile enthaltendem Geräte-, insbesondere Elektronikschrott als ein Ausführungsbeispiel des Gegenstandes der Erfindung darstellenden Zeichnung.

Zum Rückgewinnen von Edelmetallen bzw. eines edelmetallangereicherten Endproduktes unter sukzessivem Abtrennen von Fe-Metallen, NE-Metallen, Nichtmetallen sowie Drähten, Litzen und anderen Bestandteilen aus Elektronikschrott 1 wird dieser in einen Shredder 2 gegeben und zerkleinert. Das zerkleinerte Aufgabegut gelangt in ein unter dem Shredder 2 angeordnetes, erstes, in einer als Stufenrinne ausgebildeten Schwingrinne 3 integriertes, Grobsieb 4. Der Siebüberlauf SO 1 des bei einer Trennkorngröße von 20 bis 30 mm separierenden Siebes 4 wird einer Magnetscheiderkombination 5 zugeführt, die aus einem abwerfenden Trommelmagnetscheider 6 und einem aushebenden Überbandmagnetscheider 7 besteht. Damit gelingt es, zwei magnetisierbare Produkte MAG1 und MAG2 zu erhalten, von denen das Produkt MAG1 überwiegend aus noch nicht vollständig aufgeschlossenen Fe-/NE-Verbundstoffen besteht und deshalb gemäß den Pfeilen 8 zum weiteren Aufschließen zum Shredder 2 zurückgeleitet wird. Das Produkt MAG2 stellt hingegen ein verkaufsfähiges, reines Fe-Endprodukt dar und wird dem weiteren Behandlungsprozeß gemäß Pfeil 9 entzogen. Das gilt gleichermaßen für das aus dem Siebunterlauf SU 1 des Siebes 4 mittels eines weiteren Überband-Magnetscheiders 11 abgetrennte, magnetisierbare Produkt MAG, das nämlich gemäß dem Pfeil 9' bzw. 9 ebenfalls der weiteren Behandlung entzogen wird.

Das nichtmagnetisierbare Produkt NMAG aus dem Siebunterlauf SU 1 des Siebes 4 gelangt in Materialflußrichtung auf einen sich dem Magnetscheider 11 anschließenden Langteilseparator 12, der - gemäß der zuvor genannten, älteren Anmeldung P 40 41 529.5 - die in dem Aufgabegut enthaltenen Langteile in Form von Drahtstücken, Stiften, Litzen oder dergleichen durch Bürsten abtrennt. Zu diesem Zweck kann einem Förderer 13 mindestens eine, seiner Breite entsprechende Bürste 14 zugeordnet sein. Beim Durchlauf des Gutes unter der Bürste 14 nimmt diese die Langteile auf, während die übrigen Bestandteile des Aufgabegutes die Bürste 14 passieren, ohne zurückgehalten oder gestaut zu werden. Die somit zurückgewonnenen, wertvollen, nämlich überwiegend aus Kupfer bestehenden Drähte etc. befinden sich gemäß Pfeil 15 somit ebenfalls nicht mehr im Behandlungsprozeß; sie können - wie im übrigen auch alle während der Aufbereitungsmaßnahmen abgetrennten und dem weiteren Behandlungsverlauf entzogenen Stoffe - in separaten, ihnen zugeordneten Behältern gesammelt werden.

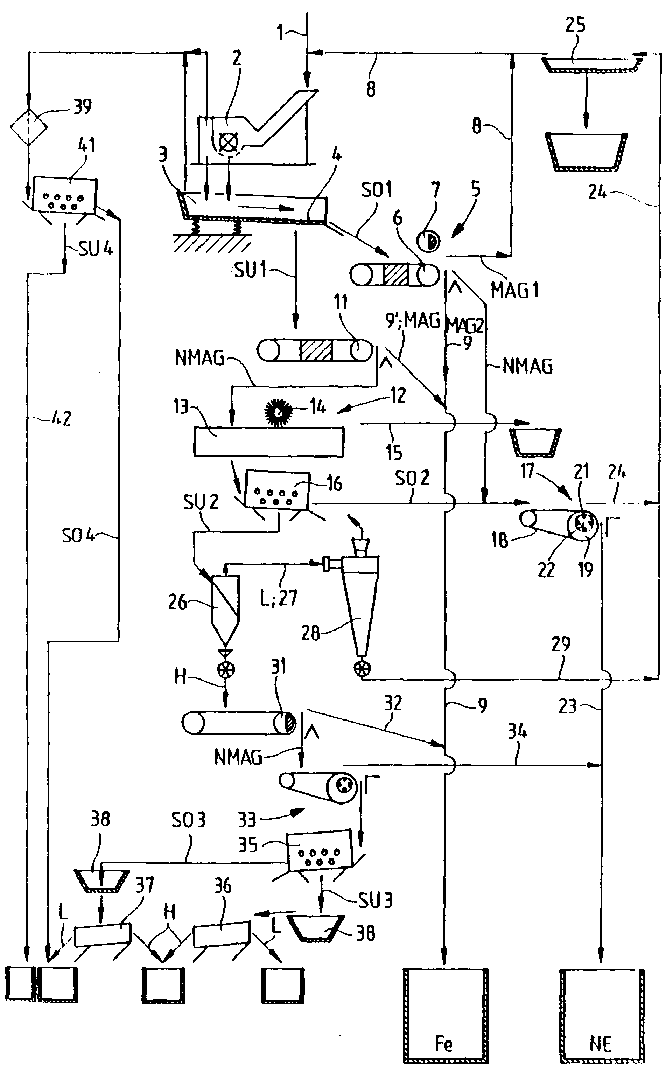

Das den Langteilseparator 12 verlassende Gut gelangt auf ein im Behandlungsablauf zweites, verglichen zum ersten Sieb 4 mittelgrobes Sieb 16 mit einer Trennkorngröße von ca. 6 bis 12 mm. Der Siebüberlauf SO 2 gelangt - ebenso wie das nichtmagnetisierbare Produkt NMAG aus dem dem Siebüberlauf SO 1 des ersten Siebes 4 nachgeschalteten Magnetscheider 5 auf einen Wirbelstromscheider 17. Der Siebüberlauf SO 2 sowie das nichtmagnetisierbare Produkt NMAG aus der Magnetscheiderstation 5 gelangen über geeignete Fördermittel, die die Aufbereitungsanlage naturgemäß enthält und die in der Zeichnung nicht dargestellt sind, auf einen Fördergurt 18 des Wirbelstromscheiders 17.

Der Fördergurt 18 arbeitet mit horizontalem Obertrum (Förderebene) und umschlingt u.a. eine in Förderrichtung nachgeordnete Kopftrommel 19. In der Trommel 19 ist ein das zum Trennen der NE- Metalle von den übrigen Bestandteilen des Aufgabegutes erforderliche Wechselmagnetfeld erzeugender, exzentrisch angeordneter, mit Permanentmagneten 21 bestückter Rotor 22 angeordnet. Der Wirbelstromscheider 17 trennt die bei der selektiven Zerkleinerung großstückig gebliebenen NE-Metalle ab, indem diese Teile aufgrund der Wirbelströme auf eine größere Flugbahn als die übrigen Bestandteile ausgelenkt werden. Diese Teile enthalten aufgrund ihrer Verwendung als mechanische Konstruktionsteile praktisch kein Edelmetall; sie werden daher gemäß dem Pfeil 23 dem weiteren Aufbereitungsprozeß entzogen und gesammelt. Hingegen wird das nicht ausgelenkte Material aus dem Wirbelstromscheider 17 gemäß den Pfeilen 24 über eine Handsortierung 25 zum Shredder 2 zurückgeführt.

Zum Rückgewinnen der edelmetallhaltigen Bestandteile bzw. der Edelmetalle und weiterer Werkstoffe wird der Siebunterlauf SU 2 einem Windsichter 26 zugeführt, der leichte, flugfähige Stoffe - vorwiegend Nichtmetalle - als Leichtgut L separiert, das gemäß dem Pfeil 27 anschließend über einen Zyklon 28 geleitet, dort von der Trägerluft befreit und gemäß dem Pfeil 29 bzw. 24 zum nochmaligen Zerkleinern zum Shredder 2 zurückgeführt wird; dies deshalb, weil - wie Versuche gezeigt haben - einige edelmetallhaltige Komponenten in dem Leichtgut L enthalten sind, die nicht verlorengehen sollen. Das in dem Windsichter 26 außerdem anfallende Schwergut H wird auf einen vorzugsweise als Starkfeld-Magnettrommelscheider ausgebildeten Magnetscheider 31 aufgegeben, der an dieser Stelle des Aufbereitungsprozesses in dem Aufgabegut evtl. noch enthaltenes Fe sowie schwachmagnetisierbare NE-Metalle und außerdem Edelstahlteile aussondert; diese Teile werden gemäß dem Pfeil 32 bzw. 9 dem weiteren Aufbereitungsprozeß entzogen und einem entsprechenden Sammelbehälter zugeführt. Hingegen gelangt das nichtmagnetisierbare Produkt NMAG des Magnetscheiders 31 auf einen weiteren, in Materialflußrichtung zweiten Wirbelstromscheider 33, der wie der erste Wirbelstromscheider 17 aufgebaut ist und NE-Metalle abtrennt, die keine Edelmetalle enthalten, wie vor allem Aluminium und Magnesium; diese Teile gelangen gemäß dem Pfeil 34 bzw. 23 in einen das NE-Metallgemisch sammelnden, nicht dargestellten Behälter.

Das von dem Wirbelstromscheider 33 nicht ausgelenkte Aufgabegut wird einem - in Materialflußrichtung dritten - Feinsieb 35 zugeführt, auf dem es bei einer Trennkorngröße von ca. 3 bis 8 mm in zwei Fraktionen klassiert wird. Dies erlaubt eine abschließende, bessere Sortierung des noch verbliebenen Aufgabegutes auf zwei Luftherden 36, 37, die über Zwischenbunker 38 dosiert beschickt werden und dem dritten Sieb 35 nachgeschaltet sind. Der Luftherd 37 ist dem Siebüberlauf SO 3 und der Luftherd 36 ist dem Siebunterlauf SU 3 zugeordnet; mit den Luftherden 36, 37 werden als Leichtgut L Je ein nichtmetallisches Produkt sowie je ein mit Edelmetall angereichertes Schwergut H als Endprodukt gewonnen. Das Schwergut H, in dem normalerweise überwiegend Kupfer zu finden ist, enthält aufgrund der erfindungsgemäßen Maßnahmen eine große Anreicherung an Edelmetallen.

Über ein Filter 39 und einen eventuell vorgeschalteten, im Verfahrensschema nicht dargestellten Zyklon werden der Shredder 2, der Zyklon 28 und die Luftherde 36, 37 sowie andere Anlagenteile entstaubt. Es ist nicht auszuschließen, daß feine und feinste Körnungen an Edelmetallen im Austrag des Filters 39 (und des gegebenenfalls vorhandenen Zyklons) enthalten sind. Dem Filter 39 ist deshalb ein - im Verfahrensablauf viertes - Sieb 41 nachgeschaltet, auf dem bei Trennkorngrößen zwischen ca. 0,5 bis 1,5 mm edelmetallhaltiger Staub als Siebunterlauf SU 4 von anderen Stoffen, z.B. Kunststoffolien, getrennt wird, die als Siebüberlauf SO 4 anfallen und dem Sammelbehälter für Nichtmetalle zugeleitet werden. Die im Siebunterlauf SU 4 enthaltenen Edelmetallanteile lassen sich in nachgeschalteten, bekannten Aufbereitungsstufen weiter anreichern und rückgewinnen.

Die erfindungsgemäß einstufige Zerkleinerung in Kombination mit den angegebenen, sich anschließenden Sortier- und Klassierstufen erlaubt somit eine schonende Zerkleinerung des Aufgabeguts in dem Sinne, daß dünne Edelmetallüberzüge von Kontakten etc. weitgehend erhalten bleiben und eine selektive Zerkleinerung in dem Sinne, daß edelmetallhaltige Bestandteile weitgehender und schneller als andere Bestandteile - z.B. Gehäuse und Chassisteile - freigelegt werden, da nichtmetallische, sprödbrüchige Werkstoffe von den duktilen Edelmetallen getrennt werden. Gleichzeitig erlaubt es die selektive Zerkleinerung, bestimmte Stoffe nur soweit in ihrer Größe zu reduzieren, daß sie weitgehend aufgeschlossen sind und sich in reiner Form durch eine sortierende, mehrstufige Klassierung zurückgewinnen lassen. Die im Aufbereitungsprozeß eingesetzten Magnet- und Wirbelstromscheider dienen zum Absondern solcher Metalle, die keine Edelmetalle enthalten.

## Patentansprüche

1. Verfahren zum Aufbereiten von metallische und nichtmetallische Teile enthaltendem Geräte-, insbesondere Elektronikschrott, der zerkleinert und mehrstufig sortiert wird, dadurch gekennzeichnet, daß das Aufgabegut einstufig und selektiv, prall- und/oder schlagbeansprucht zerkleinert und mehrstufig klassiert wird.

2. Verfahren nach Anspruch 1, dadurch gekennzeichnet, daß zwischen einer ersten und einer zweiten Siebstufe im Aufbereitungsprozeß Langteile wie Drähte, Litzen u.dgl. aussortiert werden.

3. Verfahren nach Anspruch 1 oder 2, dadurch gekennzeichnet, daß aus dem zerkleinerten Aufgabegut als Siebüberlauf anfallende, reine Fe- und NE-Metall-Teile entfernt und Metall-/Nichtmetallverbindungen ebenso wie Fe-/NE-Verbundteile aussortiert und in die Zerkleinerungsstufe zurückgeführt werden.

4. Verfahren nach einem oder mehreren der Ansprüche 1 bis 3, dadurch gekennzeichnet, daß beim Zerkleinern und vor dem Absieben Staub sowie leichtere, flugfähige Teile abgesaugt werden.

5. Verfahren nach einem oder mehreren der Ansprüche 1 bis 4, dadurch gekennzeichnet, daß aus dem zerkleinerten Aufgabegut als Siebunterlauf anfallende, magnetisierbare Teile entfernt und nichtmagnetisierbare Teile auf einen Langteilseparator aufgegeben werden.

6. Verfahren nach Anspruch 5, dadurch gekennzeichnet, daß die von Langteilen befreiten, nichtmagnetisierbaren Teile einer zweiten Siebstufe zugeführt werden und der Siebüberlauf dieser Siebstufe auf einen Wirbelstromscheider aufgegeben wird.

7. Verfahren nach einem oder mehreren der Ansprüche 1 bis 6, dadurch gekennzeichnet, daß die im Anschluß an die erste Siebstufe abgetrennten, nichtmagnetisierbaren Teile auf einen Wirbelstromscheider aufgegeben werden.

8. Verfahren nach Anspruch 6 oder 7, dadurch gekennzeichnet, daß die vom Wirbelstromscheider nicht ausgelenkten Teile des Aufgabeguts in die Zerkleinerungsstufe zurückgeführt werden.

9. Verfahren nach einem oder mehreren der Ansprüche 1 bis 8, dadurch gekennzeichnet, daß der Siebunterlauf der zweiten Siebstufe stromklassiert und das abgetrennte Leichtgut in die Zerkleinerungsstufe zurückgeführt wird.

10. Verfahren nach Anspruch 9, dadurch gekennzeichnet, daß aus dem beim Stromklassieren abgetrennten Schwergut die magnetisierbaren von den nichtmagnetisierbaren Teilen abgetrennt werden.

11. Verfahren nach Anspruch 10, dadurch gekennzeichnet, daß die nichtmagnetisierbaren Teile auf einen (zweiten) Wirbelstromscheider aufgegeben werden.

12. Verfahren nach Anspruch 11, dadurch gekennzeichnet, daß die vom Wirbelstromscheider nicht ausgelenkten Teile in einer dritten Siebstufe in zwei Fraktionen klassiert und anschließend gezielt spezifisch leichte Teile von spezifisch schweren Teilen abgetrennt werden.

13. Vorrichtung zum Aufbereiten von metallische und nichtmetallische Teile enthaltendem Geräte-, insbesondere Elektronikschrott, der zerkleinert und mehrstufig sortiert wird, dadurch gekennzeichnet, daß einem Zerkleinerer (2) mehrere Siebe (4, 16, 35) mit von Sieb zu Sieb feineren Lochöffnungen nachgeschaltet sind.

14. Vorrichtung nach Anspruch 13, dadurch gekennzeichnet, daß dem Zerkleinerer (2) ein Grobsieb (4) sowie für den Siebüber- und den Siebunterlauf (SO 1 bzw. SU 2) jeweils ein Magnetscheider (5 bzw. 11), im Anschluß an den Siebunterlauf-Magnetscheider (11) ein Langteilseparator (12) sowie ein zweites, mittelgrobes Sieb (16), für den Siebüberlauf (SO 2) ein Wirbelstromscheider (17) und den Siebunterlauf (SU 2) ein Windsichter (26) mit einem Magnetscheider (31), einem Wirbelstromscheider (33) und einem Feinsieb (35) sowie Luftherden (36, 37) für Jeweils den Siebüber- und den Siebunterlauf (SO 3 bzw. SU 3) in der angegebenen Reihenfolge nachgeschaltet sind.

15. Vorrichtung nach Anspruch 14, dadurch gekennzeichnet, daß das Grobsieb (4) als Teil einer Schwingrinne (3) gestuft ausgebildet ist.

16. Vorrichtung nach Anspruch 13 oder 14, dadurch gekennzeichnet, daß die dem Siebüberlauf (SO 1) nachgeordnete Magnetscheiderstation (5) aus einer Kombination eines Trommel- (7) und eines Überbandmagnetscheiders (6) besteht und der dem Siebunterlauf (SU 1) zugeordnete Magnetscheider vorzugsweise ein Überbandmagnetscheider (11) ist.

17. Vorrichtung nach einem oder mehreren der Ansprüche 13 bis 16, dadurch gekennzeichnet, daß der Langteilseparator (12) auf den Magnetscheider (11) folgend angeordnet ist.

18. Vorrichtung nach einem oder mehreren der Ansprüche 13 bis 17, gekennzeichnet durch ein vibrierendes Stangensieb als zweites Sieb (16).

19. Vorrichtung nach einem oder mehreren der Ansprüche 13 bis 18, dadurch gekennzeichnet, daß die als NE-Scheider eingesetzten Wirbelstromscheider (17, 33) exzentrisch in einer von einem Fördergurt (18) umschlungenen Trommel (19) angeordnete, mit Permanentmagneten (21) bestückte Rotoren (22) aufweisen.

20. Vorrichtung nach einem oder mehreren der Ansprüche 13 bis 19, dadurch gekennzeichnet, daß der Windsichter (26) als Vertikal-Gegenstromsichter ausgebildet und an einen Zyklon (28) angeschlossen ist.

21. Vorrichtung nach einem oder mehreren der Ansprüche 13 bis 20, dadurch gekennzeichnet, daß der dem Windsichter (26) nachgeschaltete Magnetscheider (31) ein Starkfeld-Magnettrommelscheider ist.

22. Vorrichtung nach einem oder mehreren der Ansprüche 13 bis 21, gekennzeichnet durch den Luftherden (36, 37) zugeordnete Zwischenbunker (28).

23. Vorrichtung nach einem oder mehreren der Ansprüche 13 bis 22, dadurch gekennzeichnet, daß der Zerkleinerer (2), der Zyklon (28), die Luftherde (36, 37) und die Schwingrinne bzw. das Sieb (3, 4) an ein Filter (39) angeschlossen sind.

24. Vorrichtung nach Anspruch 23, dadurch gekennzeichnet, daß dem Filter (39) ein viertes, sehr feines Sieb (41) nachgeschaltet ist.

25. Vorrichtung nach einem oder mehreren der Ansprüche 13 bis 24, gekennzeichnet durch eine im Materialrücklauf angeordnete Handsortierung (25).

## Claims

1. A process for the recycling of equipment scrap, and of electronics scrap in particular, containing metallic and non-metallic components, which is comminuted and then sorted in multiple stages, characterised in that the yield material is comminuted in one stage, selectively, and subjected to percussion and/or impact, and classified in multiple stages.

2. A process according to Claim 1, characterised in that long components such as wires, flexible leads, and similar items are sorted between a first and second screening stage in the recycling process.

3. A process according to Claims 1 or 2, characterised in that pure Fe and non-metallic components, which are derived as screening outflow from the comminuted yield material, are removed, and metallic/non-ferrous metallic combinations as well as Fe/non-ferrous metallic composite components are screened out and conducted back to the comminution stage.

4. A process according to one or more of Claims 1 to 3, characterised in that, during the comminution process and before screening, dust and lighter components capable of becoming airborne are sucked away.

5. A process according to one or more of Claims 1 to 4, characterised in that components which are capable of becoming magnetised, deriving as screening outflow from the comminuted yield material, are removed, and components which are not capable of being magnetised are loaded onto a long component separator.

6. A process according to Claim 5, characterised in that the components which are not capable of magnetisation, which are freed from the long components, are conducted to a second screening stage, and the screening outflow from this screening stage is passed to an eddy current cutter.

7. A process according to one or more of Claims 1 to 6, characterised in that the components which are not capable of being magnetised and are screened out following the first screening stage, are passed to an eddy current cutter.

8. A process according to Claim 6 or 7, characterised in that the components from the yield material which are not deflected by the eddy current cutter are conducted back to the comminution stage.

9. A process according to one or more of Claims 1 to 8, characterised in that the screen outflow from the second screening stage is classified by the flow, and the light material which has been separated out is conducted back to the comminution stage.

10. A process according to Claim 9, characterised in that the components capable of being magnetised are separated from those which cannot be magnetised, from among the heavy material which is separated during the flow classification process.

11. A process according to Claim 10, characterised in that the components which are not capable of being magnetised are passed to a (second) eddy current cutter.

12. A process according to Claim 11, characterised in that the components which are not deflected by the eddy current cutter are classified into two fractions in a third screening stage, and are then separated into specific light components and specific heavy components.

13. A device for the recycling of equipment scrap, and electronic scrap in particular, containing metallic and non-metallic components, which carries out comminution and sorting in multiple stages, characterised in that several screens (4, 16, 35) are connected in series to a comminution device (2), with finer and finer apertures from screen to screen.

14. A device according to Claim 13, characterised in that a coarse screen (4) is connected in series to the comminutor (2), and a magnetic cutter (5 and 11 respectively) is connected in series in each case for the screen top outflow and bottom outflow (SO 1 and SU 2 respectively); a long component separator (12) is connected following the screen bottom outflow magnetic cutter (11); and a second, medium-coarse screen unit (16) for the screen top outflow (SO 2) has an air separator (26) with a magnetic cutter (31) connected to it in series, the said air separator having an eddy current cutter (330 and a fine screen unit (35), as well as pneumatic tables (36, 37) for the screen top outflow and bottom outflow (SO 3 and SU 3 respectively) in each case, in the sequence as indicated.

15. A device according to Claim 14, characterised in that the coarse screen (4) is designed as part of a vibrating trough (3) in a stepped design.

16. A device according to Claims 13 or 14, characterised in that the magnetic cutting station (5) which is arranged after the screen top outflow (SO 1) consists of a combination of a drum separator (7) and a magnetic cutter (6) located above the belt, and that the magnetic cutter allocated to the screen bottom outflow (SU 1) is, for preference, a magnetic cutter (11) located above the belt.

17. A device according to one or more of Claims 13 to 15, characterised in that the long component separator (12) is arranged following the magnetic cutter (11).

18. A device according to one or more of Claims 13 to 17, characterised in that a vibrating bar screen serves as the second screen unit (16).

19. A device according to one or more of Claims 13 to 18, characterised in that the eddy current cutters (17, 33) used as the non-ferrous cutters, are arranged in an eccentric manner in a drum (19) around which the conveyor belt (18) is wound, and feature rotors (22) fitted with permanent magnets (21).

20. A device according to one or more of Claims 13 to 19, characterised in that the air separator (26) is designed as a vertical counterflow separator, and is connected to a cyclone (28).

21. A device according to one or more of Claims 13 to 20, characterised in that the magnetic cutter (31) arranged in series after the air separator (31) is a high-field magnetic drum cutter.

22. A device according to one or more of Claims 13 to 21, characterised by the intermediate bunker (28) allocated to the pneumatic tables (36, 37).

23. A device according to one or more of Claims 13 to 22, characterised in that the comminutor (2), the cyclone (28), the pneumatic tables (36, 37), and the vibrating trough or screen respectively (3, 4) are connected to a filter (39).

24. A device according to Claim 23, characterised in that a fourth, very fine screen (41) is connected in series following the filter (39).

25. A device according to one or more of Claims 13 to 24, characterised in that a manual sorting system (25) is arranged in the material return flow.

## Revendications

1. Procédé pour le traitement d'appareils et notamment d'appareils électroniques usagés contenant des pièces métalliques et non métalliques, lesquels sont broyés et triés en plusieurs stades successifs, caractérisé en ce que le matériau chargé est soumis à un concassage par impact ou par choc, sélectif et ne comportant qu'une seule étape, et criblé en plusieurs stades successifs.

2. Procédé selon la revendication 1 caractérisé en ce qu'on extrait les pièces longues telles que les fils, torons et autres entre un premier et un second niveau de criblage lors du processus de traitement.

3. Procédé selon la revendication 1 ou 2 caractérisé en ce qu'on enlève du matériau broyé les parties métalliques pures ferreuses et non ferreuses produites comme refus de criblage et qu'on extrait les composés métalliques et non métalliques ainsi que les matières composites ferreuses et non ferreuses pour les réintroduire dans le niveau de broyage.

4. Procédé selon l'une ou plusieurs des revendications 1 à 3 caractérisé en ce qu'on aspire la poussière ainsi que les particules légères et volatiles lors du broyage et avant le criblage.

5. Procédé selon l'une ou plusieurs des revendications 1 à 4 caractérisé en ce qu'on enlève du matériau broyé les parties magnétisables de passée et qu'on charge les parties non magnétisables sur un séparateur de pièces longues.

6. Procédé selon la revendication 5 caractérisé en ce qu'on introduit dans un deuxième niveau de criblage les parties non magnétisables, exemptes de pièces longues et qu'on charge le refus de criblage de ce second niveau sur un capteur de poussières à tourbillonnement.

7. Procédé selon l'une ou plusieurs des revendications 1 à 6 caractérisé en ce qu'on charge sur un capteur de poussières à tourbillonnement les parties non magnétisables, séparées après le premier niveau de criblage.

8. Procédé selon la revendication 6 ou 7 caractérisé en ce qu'on réintroduit dans le niveau de broyage les parties du matériau chargé qui n'ont pas été écartées par le capteur de poussières à tourbillonnement.

9. Procédé selon l'une ou plusieurs des revendications 1 à 8 caractérisé en ce qu'on sépare à courant d'eau la passée du second niveau de criblage et qu'on réintroduit les matériaux légers dans le niveau de broyage.

10. Procédé selon la revendication 9 caractérisé en ce qu'on sépare les parties magnétisables des parties non magnétisables dans les produits lourds écartés lors de la séparation à courant d'eau.

11. Procédé selon la revendication 10 caractérisé en ce qu'on charge les parties non magnétisables sur un (second) capteur de poussières à tourbillonnement.

12. Procédé selon la revendication 11 caractérisé en ce qu'on classe en deux groupes dans un troisième niveau de criblage les parties qui n'ont pas été écartées par le capteur de poussières à tourbillonnement et qu'on sépare ensuite de manière appropriée les parties spécifiquement légéres des parties spécifiquement lourdes.

13. Dispositif pour le traitement d'appareils et notamment d'appareils électroniques usagés contenant des pièces métalliques et non métalliques, lesquels sont broyés et triés en plusieurs stades successifs, caractérisé en ce qu'on a intercalé en aval d'un broyeur (2) plusieurs cribles (4, 16, 35) dont les ouvertures sont de plus en plus fines de crible en crible.

14. Dispositif selon la revendication 13 caractérisé en ce qu'on a intercalé en aval du broyeur (2) et dans l'ordre suivant un crible préalable (4) ainsi que deux séparateurs magnétiques (5 et 11) respectivement pour le refus de criblage (SO 1) et la passée (SU 2), le séparateur magnétique (11) pour la passée étant suivi d'un séparateur de pièces longues (12) ainsi que d'un second crible, grossier moyen (16), d'un capteur de poussières à tourbillonnement (17) pour le refus de criblage (SO 2) et d'un séparateur à air (26) avec un séparateur magnétique (31), un capteur de poussières à tourbillonnement (33) et un crible fin (35) pour la passée (SU 2) ainsi que des tables d'épuration pneumatiques (36, 37) pour le refus de criblage (SO 3) et la passée (SU 3).

15. Dispositif selon la revendication 14 caractérisé en ce que le crible préalable (4) est formé en paliers comme partie intégrante d'un couloir vibrant (3).

16. Dispositif selon la revendication 13 ou 14 caractérisé en ce que la station de séparateur magnétique (5) placée en aval du refus de criblage (SO 1) est une combinaison composée d'un séparateur rotatif (7) et d'un séparateur magnétique (6) situé au-dessus de la bande et en ce que le séparateur magnétique affecté à la passée (SU 1) est de préférence un séparateur magnétique situé au-dessus de la bande (11).

17. Dispositif selon l'une ou plusieurs des revendications 13 à 16 caractérisé en ce que le séparateur de pièces longues (12) est disposé en aval du séparateur magnétique (11).

18. Dispositif selon l'une ou plusieurs des revendications 13 à 17 caractérisé en ce que le second crible (16) est un crible à barreaux vibrant.

19. Dispositif selon l'une ou plusieurs des revendications 13 à 18 caractérisé en ce que les séparateurs de poussière à tourbillonnement (17, 33) utilisés comme séparateurs d'éléments non ferreux et disposés de manière excentrique dans un tambour (19) entouré d'une courroie de convoyage (19) présentent des induits (22) pourvus d'aimants permanents (21)

20. Dispositif selon l'une ou plusieurs des revendications 13 à 19 caractérisé en ce que le séparateur à air (26) est formé comme un séparateur vertical à contre-courant et relié à un cyclone (28).

21. Dispositif selon l'une ou plusieurs des revendications 13 à 20 caractérisé en ce que le séparateur magnétique (31) monté en aval du séparateur à air (26) est un séparateur à tambour magnétique à champ intense.

22. Dispositif selon l'une ou plusieurs des revendications 13 à 21 caractérisé par le silo intermédiaire (28) affecté aux tables d'épuration pneumatiques (36, 37).

23. Dispositif selon l'une ou plusieurs des revendications 13 à 22 caractérisé en ce que le broyeur (2), le cyclone (28), les tables d'épuration pneumatiques (36, 37) et le couloir vibrant ou le crible (3, 4) sont raccordés à un filtre (39).

24. Dispositif selon la revendication 23 caractérisé en ce qu'un quatrième crible très fin (41) est placé en aval du filtre (39).

25. Dispositif selon l'une ou plusieurs des revendications 13 à 24 caractérisé par un triage manuel (25) lors du retour du matériau.
